# FASCICULE DE BREVET EUROPEEN

(11) **EP 3 001 638 B1**
(45) Date de publication et mention de la délivrance du brevet: **26.04.2017**
(21) Numéro de dépôt: 15186351.1
(22) Date de dépôt: 22.09.2015
(51) Int. Cl.: H04L 29/06, G06F 21/44

(54) **AUTHENTIFICATION D'UN DISPOSITIF ELECTRONIQUE SECURISE DEPUIS UN DISPOSITIF ELECTRONIQUE NON SECURISE**
AUTHENTIFIZIERUNG EINER GESICHERTEN ELEKTRONISCHEN VORRICHTUNG VON EINER NICHT GESICHERTEN ELEKTRONISCHEN VORRICHTUNG AUS
AUTHENTICATION OF A SECURE ELECTRONIC DEVICE FROM A NON-SECURE ELECTRONIC DEVICE

(30) Priorité: 25.09.2014 FR 1459069
(43) Date de publication de la demande: 30.03.2016
(73) Titulaire: Morpho, 92130 Issy-les-Moulineaux (FR)
(72) Inventeur: BUCCI, Damien, 92130 ISSY LES MOULINEAUX (FR); SOBCZYK, Dominique, 92130 ISSY LES MOULINEAUX (FR)
(74) Mandataire: Cabinet Plasseraud

(56) Documents cités:
- US-A1- 2006 090 073
- US-A1- 2014 007 221

## Description

L'invention concerne l'authentification d'un dispositif électronique sécurisé (tel qu'un serveur d'une banque) à partir d'un dispositif électronique non sécurisé (tel qu'un ordinateur personnel ou un téléphone portable).

Les dispositifs électroniques non sécurisés sont très répandus. Certains d'entre eux tirent leur valeur du fait qu'ils sont hautement personnalisables, c'est-à-dire qu'il est possible d'y charger toutes sortes de logiciels permettant de remplir les fonctions les plus diverses, ce qui leur confère une grande flexibilité. Cependant, ceci requiert d'ouvrir un grand nombre d'interfaces du dispositif électronique non sécurisé, afin de permettre au plus grand nombre possible de tiers de développer des logiciels les plus variés possibles. En ouvrant ainsi les interfaces (c'est-à-dire les accès possibles), on ouvre également les possibilités d'abus. Sécuriser les interfaces s'avère souvent extrêmement contraignant en l'état des connaissances actuelles, et on privilégie donc parfois la richesse des fonctionnalités au détriment de la sécurité. En contrepartie, il existe de nombreuses façons de violer la sécurité de tels dispositifs électroniques non sécurisés. Par exemple, il est possible, pour certains d'entre eux, de charger des virus, des chevaux de Troie, des spyware, ou toutes sortes de logiciels malveillants. Il existe par exemple des logiciels malveillants conçus pour intercepter les frappes opérée sur un clavier du dispositif électronique non sécurisé et les espionner voire (de surcroît) les modifier. Il existe également des logiciels malveillants conçus pour prendre le contrôle d'un écran du dispositif électronique non sécurisé, et afficher autre chose que ce que le dispositif électronique est censé afficher. Ces différents logiciels malveillants permettent ainsi d'intercepter des mots de passe, et de modifier des transactions, sans que l'utilisateur du dispositif électronique non sécurisé ne s'en aperçoive. Une personne effectuant un virement bancaire peut ainsi penser (sur la base de ses frappes clavier et de l'affichage) avoir effectué un virement d'un certain montant vers un certain compte, alors que le logiciel malveillant a en réalité effectué un virement beaucoup plus élevé vers un autre compte (celui de l'attaquant par exemple).

Il est connu d'installer un circuit électronique sécurisé au sein d'un dispositif électronique non sécurisé. Ceci vise notamment à sécuriser différentes tâches effectuées par le dispositif électronique non sécurisé.

Il est notamment connu de réserver une partie d'un écran du dispositif électronique non sécurisé au circuit électronique sécurisé. Ainsi, seul le circuit électronique sécurisé peut afficher des informations dans cette partie de l'écran, et l'utilisateur du dispositif électronique non sécurisé a ainsi la certitude que ce qui est affiché dans cette partie d'écran provient du circuit électronique sécurisé (et non, par exemple, d'un virus qui contrôlerait directement l'écran). Cette solution exige cependant de rendre cette partie de l'écran indisponible pour les usages courants, ce qui est extrêmement pénalisant dans de nombreuses situations.

Il est également connu d'intégrer une diode électroluminescente dédiée (ci-après LED) dans le dispositif électronique non sécurisé, la LED étant contrôlée exclusivement par le circuit électronique sécurisé, et de faire allumer la LED par le circuit électronique sécurisé lorsque ce dernier prend le contrôle de l'écran. L'utilisateur sait ainsi quand ce qui est affiché à l'écran provient de ce circuit. Cette solution exige cependant de prévoir cette LED, ce qui induit un coût supplémentaire (en matériel) qui n'est pas toujours acceptable.

Enfin, il est connu de procéder à une authentification à l'aide par exemple d'un mot de passe (code PIN, phrase secrète, etc.) enrôlé au préalable. Toutefois, l'utilisateur n'est pas en mesure de savoir si l'authentification s'opère via une connexion sécurisée par le circuit électronique sécurisé ou via une fausse connexion établie par exemple par un virus.

Ainsi, EP 1952297 A2 divulgue un procédé d'authentification, par un utilisateur, d'un mode de fonctionnement sécurisé d'un système d'information comportant des moyens de présentation d'informations à l'utilisateur, des moyens de saisie de données par l'utilisateur et des moyens de stockage.

US7302585B1, EP 1056014 A1 et EP 1181645 A1 divulguent quant à eux un système informatique comprenant un processeur d'affichage sécurisé distinct du processeur principal du système. Le processeur d'affichage sécurisé interagit avec une carte à puce pour extraire et afficher une image sécurisée.

L'invention vient améliorer la situation.

Selon un aspect de l'invention, un procédé d'authentification d'un dispositif électronique sécurisé depuis un dispositif électronique non sécurisé comprenant un périphérique d'entrée, un périphérique de sortie et un circuit électronique sécurisé, comprend :
/a/ une prise de contrôle du périphérique d'entrée et du périphérique de sortie par le circuit électronique sécurisé ;
/b/ une ouverture de session sécurisée par le circuit électronique sécurisé avec le dispositif électronique sécurisé ;
/c/ une acquisition, par le circuit électronique sécurisé, d'une information d'utilisateur ;
/d/ une transmission, par le circuit électronique sécurisé au dispositif électronique sécurisé, de l'information d'utilisateur ;
/e/ une réception, par le circuit électronique sécurisé, d'une information d'utilisateur transformée issue d'une transformation prédéterminée appliquée par le dispositif électronique sécurisé à l'information d'utilisateur ;
/f/ un envoi par le circuit électronique sécurisé au périphérique de sortie contrôlé par le circuit électronique sécurisé de l'information d'utilisateur transformée ;
/g/ une obtention d'une information d'authentification par le circuit électronique sécurisé depuis le périphérique d'entrée contrôlé par le circuit électronique sécurisé ;
/h/ une authentification, par le circuit électronique sécurisé, du dispositif électronique sécurisé en fonction de l'information d'authentification obtenue.

Ce procédé est avantageux en ce qu'il permet à un utilisateur humain du dispositif électronique non sécurisé de s'assurer qu'il a bien établi une connexion sécurisée avec le dispositif électronique sécurisé.

Selon un autre aspect de l'invention, un circuit électronique sécurisé agencé pour être installé dans un dispositif électronique non sécurisé comprenant un périphérique d'entrée et un périphérique de sortie, comprend :
un circuit électronique de prise de contrôle du périphérique d'entrée et du périphérique de sortie ;
un circuit électronique d'ouverture de session sécurisée avec un dispositif électronique sécurisé ;
un circuit électronique d'acquisition d'une information d'utilisateur ;
un circuit électronique de transmission au dispositif électronique sécurisé, de l'information d'utilisateur ;
un circuit électronique de réception d'une information d'utilisateur transformée issue d'une transformation prédéterminée appliquée par le dispositif électronique sécurisé à l'information d'utilisateur ;
un circuit électronique d'envoi au périphérique de sortie contrôlé par le circuit électronique sécurisé de l'information d'utilisateur transformé ;
un circuit électronique d'obtention d'une information d'authentification depuis le périphérique d'entrée contrôlé par le circuit électronique sécurisé ;
un circuit électronique d'authentification du dispositif électronique sécurisé en fonction de l'information d'authentification obtenue.

Ce circuit est avantageux en ce qu'il permet la mise en oeuvre du procédé précité.

Un autre aspect de l'invention concerne un programme d'ordinateur comprenant une série d'instructions qui, lorsqu'elles sont exécutées par un processeur, mettent en oeuvre le procédé selon un procédé selon un aspect de l'invention.

Un autre aspect de l'invention concerne un support de stockage non transitoire lisible par ordinateur stockant un programme d'ordinateur selon un aspect de l'invention.

D'autres aspects, buts et avantages de l'invention apparaîtront à la lecture de la description d'un de ses modes de réalisation.

L'invention sera également mieux comprise à l'aide des dessins, sur lesquels :
- la figure 1 illustre un procédé selon un aspect de l'invention ;
- la figure 2 illustre d'une manière différente ledit procédé ;
- la figure 3 illustre un système électronique selon un aspect de l'invention ;
- la figure 4 illustre un TPM d'un système selon un aspect de l'invention ;
- les figures 5 à 8 illustrent des techniques de transformation d'image utilisables dans le cadre de l'invention.

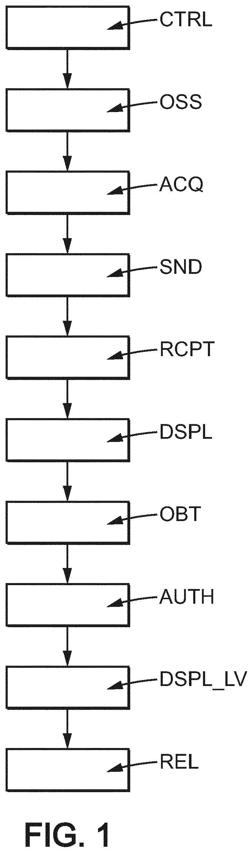

La figure 1 illustre les étapes consécutives d'un procédé selon un aspect de l'invention. La figure 1 montre ainsi :
une prise de contrôle CTRL d'un ou plusieurs périphérique(s) d'entrée KBD, MS, TS, CAM, MIC et d'un ou plusieurs périphérique(s) de sortie SCR, SPK, PRN, TS par un circuit électronique sécurisé TPM, puis
une ouverture OSS de session sécurisée (par exemple de type VPN ou TLS) par le circuit électronique sécurisé TPM avec un dispositif électronique sécurisé BNK_SRV, puis
une acquisition ACQ, par le circuit électronique sécurisé TPM, d'une information d'utilisateur IMG, puis
une transmission SND, par le circuit électronique sécurisé TPM au dispositif électronique sécurisé BNK_SRV, de l'information d'utilisateur IMG, (via la session sécurisée) puis
une réception RCPT (via la session sécurisée), par le circuit électronique sécurisé TPM, d'une information d'utilisateur transformée TRN_IMG issue d'une transformation prédéterminée appliquée par le dispositif électronique sécurisé BNK_SRV à l'information d'utilisateur IMG, puis
un envoi DSPL, par le circuit électronique sécurisé TPM au périphérique de sortie SCR, SPK, PRN, TS contrôlé par le circuit électronique sécurisé TPM de l'information d'utilisateur transformée TRN_IMG, puis
une obtention OBT d'une information d'authentification OK_NOK par le circuit électronique sécurisé TPM depuis le périphérique d'entrée KBD, MS, TS, CAM, MIC contrôlé par le circuit électronique sécurisé TPM, puis
une authentification AUTH, par le circuit électronique sécurisé TPM, du dispositif électronique sécurisé BNK_SRV en fonction de l'information d'authentification OK_NOK obtenue, puis
un envoi DSPL_LV par le circuit électronique sécurisé TPM d'une information de libération SEC_MSG audit périphérique de sortie SCR, SPK, PRN, TS (prévenant l'utilisateur qu'il quitte le mode sécurisé c'est-à-dire que le contrôle CTRL des périphériques d'entrées et de sortie par le circuit électronique sécurisé TPM cesse), puis
une libération REL du périphérique d'entrée KBD, MS, TS, CAM, MIC et du périphérique de sortie SCR, SPK, PRN, TS par le circuit électronique sécurisé TPM.

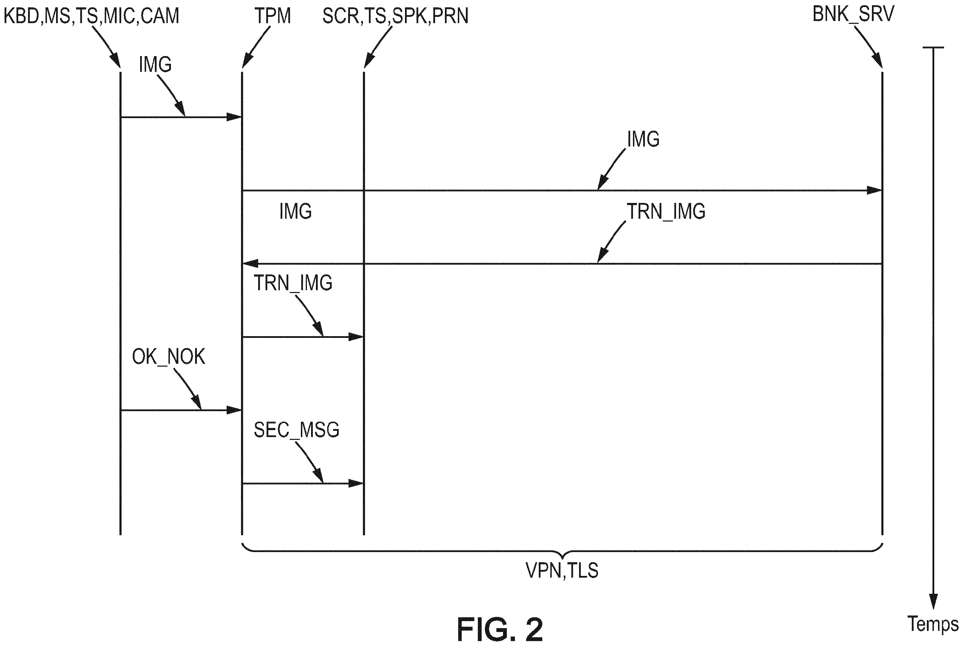

La figure 2 montre le même procédé, en illustrant les échanges d'informations entre les différentes entités. L'accolade horizontale notée VPN, TLS illustre la session sécurisée entre le circuit électronique sécurisé TPM et le dispositif électronique sécurisé BNK_SRV. Les périphériques de sortie SCR, TS, SPK, PRN sont représentés entre le circuit électronique sécurisé TPM et le dispositif électronique sécurisé BNK_SRV par commodité d'illustration mais ne sont en principe pas partie(s) prenante(s) dans la session sécurisée VPN, TLS, qui relie directement le circuit électronique sécurisé TPM et le dispositif électronique sécurisé BNK_SRV.

La figure 2 illustre ainsi, le temps s'écoulant selon l'axe vertical orienté vers le bas :
une acquisition ACQ, par le circuit électronique sécurisé TPM, d'une information d'utilisateur (en l'occurrence une image IMG), obtenue depuis un périphérique d'entrée (en l'occurrence, il peut s'agir d'une caméra CAM), puis
une transmission SND, via un canal sécurisé VPN, TLS, de l'image IMG du circuit électronique sécurisé TPM vers le dispositif électronique sécurisé BNK_SRV.
une réception RCPT (via la session sécurisée), par le circuit électronique sécurisé TPM, d'une information d'utilisateur transformée (image transformée TRN_IMG) issue d'une transformation prédéterminée appliquée par le dispositif électronique sécurisé BNK_SRV à l'information d'utilisateur IMG, puis
un envoi DSPL, par le circuit électronique sécurisé TPM au périphérique de sortie SCR, SPK, PRN, TS contrôlé par le circuit électronique sécurisé TPM (en l'occurrence l'écran SCR ou l'écran tactile TS ou l'imprimante PRN) de l'information d'utilisateur transformée TRN_IMG, puis
une obtention OBT d'une information d'authentification OK_NOK par le circuit électronique sécurisé TPM depuis le périphérique d'entrée KBD, MS, TS, CAM, MIC contrôlé par le circuit électronique sécurisé TPM (l'utilisateur humain peut ainsi, après avoir perçu grâce au périphérique de sortie l'information d'utilisateur transformée et après avoir vérifié si elle était conforme à l'information d'utilisateur transmise, saisir de façon sécurisée via un périphérique d'entrée une information OK_NOK indiquant qu'il y a ou non conformité), puis
une authentification AUTH (non représentée), par le circuit électronique sécurisé TPM, du dispositif électronique sécurisé BNK_SRV en fonction de l'information d'authentification OK_NOK obtenue, puis
un envoi DSPL_LV par le circuit électronique sécurisé TPM d'une information de libération SEC_MSG audit périphérique de sortie SCR, SPK, PRN, TS (prévenant l'utilisateur qu'il quitte le mode sécurisé, c'est-à-dire que le contrôle CTRL des périphériques d'entrées et de sortie par le circuit électronique sécurisé TPM cesse), puis
une libération REL (non représentée) du périphérique d'entrée KBD, MS, TS, CAM, MIC et du périphérique de sortie SCR, SPK, PRN, TS par le circuit électronique sécurisé TPM (c'est-à-dire que le circuit électronique sécurisé cesse de contrôler lesdits périphériques et les rend directement accessibles à d'autres entités).

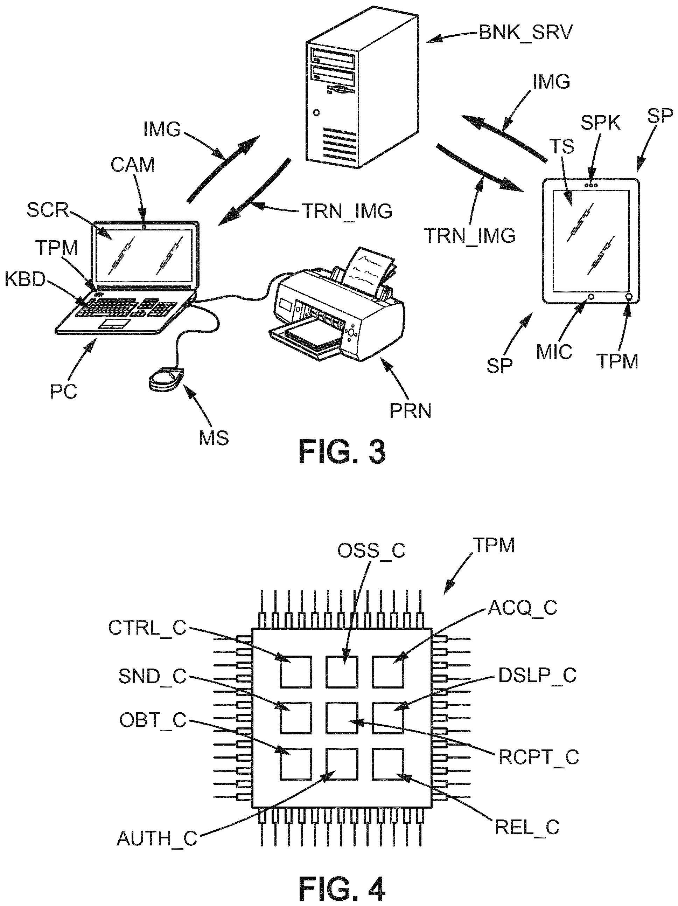

La figure 3 un système électronique selon un aspect de l'invention. Le système comprend un dispositif électronique sécurisé BNK_SRV (en l'occurrence, un serveur de banque). Ce dispositif électronique sécurisé BNK_SRV communique avec des dispositifs électroniques non sécurisés tels qu'un ordinateur personnel PC ou un téléphone portable intelligent (en anglais smartphone) SP. Ces dispositifs électroniques non sécurisés comprennent des périphériques d'entrée tels qu'un clavier KBD, une souris MS, un appareil photo (ou caméra) CAM, un micro MIC ou un écran tactile TS. Ils comprennent également des périphériques de sortie tels qu'un écran SCR, un haut parleur SPK, une imprimante PRN ou un écran tactile TS (qui est à la fois un périphérique d'entrée et de sortie).

Le dispositif électronique sécurisé BNK_SRV peut ainsi recevoir des informations (telles qu'une image IMG) depuis les dispositifs électroniques non sécurisés et leur transmettre lui-même de l'information (telle qu'une image transformée TRN_IMG).

La figure 4 représente de manière plus détaillée un circuit électronique sécurisé TPM. Ce circuit électronique sécurisé TPM peut comprendre notamment des circuits CTRL_C, OSS_C, ACQ_C, SND_C, RCPT C, DSPL_C, OBT_C, AUTH_C et REL_C. Chacun de ces neuf circuits peut comprendre un même processeur du circuit électronique sécurisé TPM (commun à tous ces circuits ou alternativement à certains d'entre eux seulement) ou disposer d'un processeur propre. Chacun de ces circuits peut comprendre une mémoire comprenant un programme d'ordinateur apte à faire fonctionner chacun de ces circuits (c'est-à-dire apte _à mettre en oeuvre les diverses fonctions susceptibles de devoir être exécutées par chacun de ces circuits). Les neuf circuits précités peuvent à cette fin utiliser chacun une portion qui leur est réservée d'une même puce mémoire du circuit électronique sécurisé TPM. Alternativement, chacun des neuf circuits (ou certain d'entre eux seulement) comprend sa propre puce mémoire. Alternativement les neuf circuits sont réalisés sous forme de circuits électroniques sur mesure (sans processeur ni programme d'ordinateur - par exemple en logique câblée).

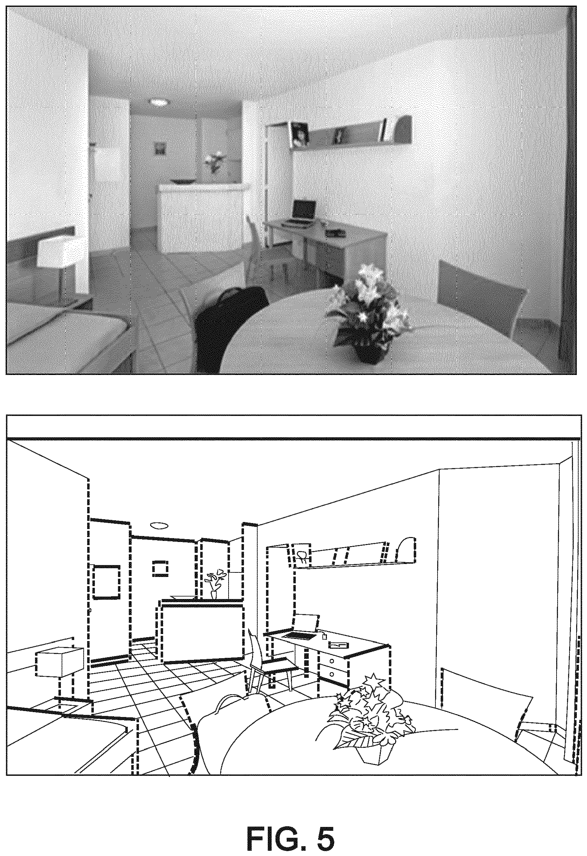

La figure 5 illustre une transformation d'image consistant à modifier une image source (l'image du haut, en l'occurrence la photographie d'une pièce meublée) en identifiant, par traitement d'image, toutes les arêtes. L'image transformée est une image composée des arêtes identifiées. Ces arêtes sont colorées. Les arêtes verticales (qui peuvent par exemple être définies comme des arêtes dont l'angle par rapport à la verticale est compris entre -10° et +10°) sont colorées d'une certaine couleur (par exemple en vert), les arêtes horizontales (qui peuvent par exemple être définies comme des arêtes dont l'angle par rapport à la verticale est compris entre -20° et +20°) sont colorées d'une autre couleur (par exemple en orange), et les autres arêtes sont colorées aléatoirement. L'utilisateur choisit la couleur des arêtes verticales et horizontales, et s'attend à ce que l'image transformée reçue corresponde à l'image qu'il a transmise, modifiées en colorant les arêtes de la manière qu'il a spécifiée. Sur la figure 5, la couleur n'étant pas autorisée, les couleurs de la photographie sont représentées en teintes de gris et les couleurs des arêtes sont représentées schématiquement par différents types de traits (pleins, pointillés).

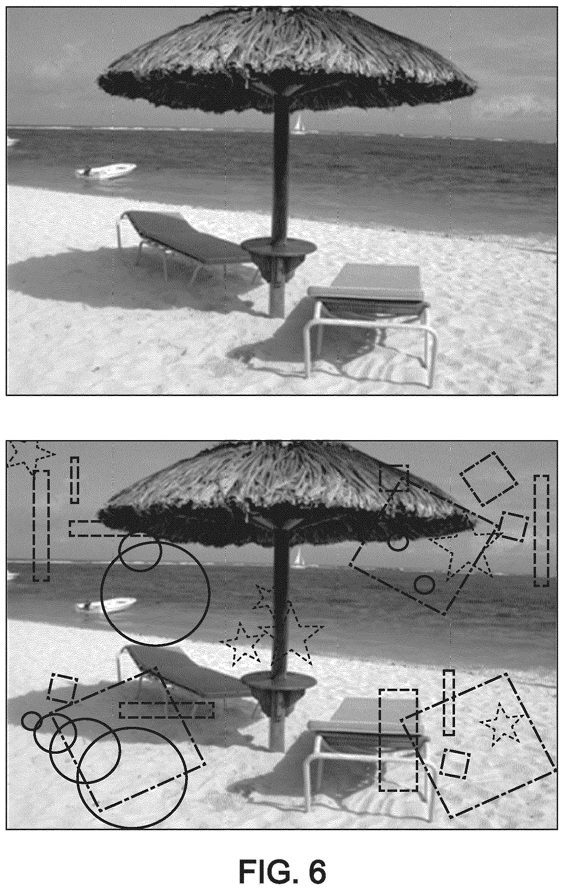

La figure 6 illustre une autre transformation d'image consistant à modifier une image source (l'image du haut, en l'occurrence la photographie de deux chaises longues et d'un parasol sur une plage) en ajoutant trois étoiles au centre de l'image. L'utilisateur définit donc la transformation en requérant l'ajout de trois étoiles au centre de l'image, sous forme de watermark (terme anglais pour désigner un filigrane). La taille des étoiles est choisie aléatoirement et les étoiles sont choisies sensiblement au centre de l'image (positionnement aléatoire mais proche du centre). Pour rendre la transformation plus complexe à deviner par un tiers espionnant éventuellement des échanges, le dispositif électronique sécurisé est agencé pour ajouter de nombreux autres éléments (dont d'autres étoiles), de façon complètement aléatoire. L'utilisateur doit vérifier que parmi tous les éléments ajoutés, il y a bien trois étoiles vers le centre. Sur la figure 6, la couleur n'étant pas autorisée, les couleurs de la photographie sont représentées en teintes de gris et les couleurs des arêtes des éléments ajoutés sont représentées schématiquement par différents types de traits (pleins, pointillés.

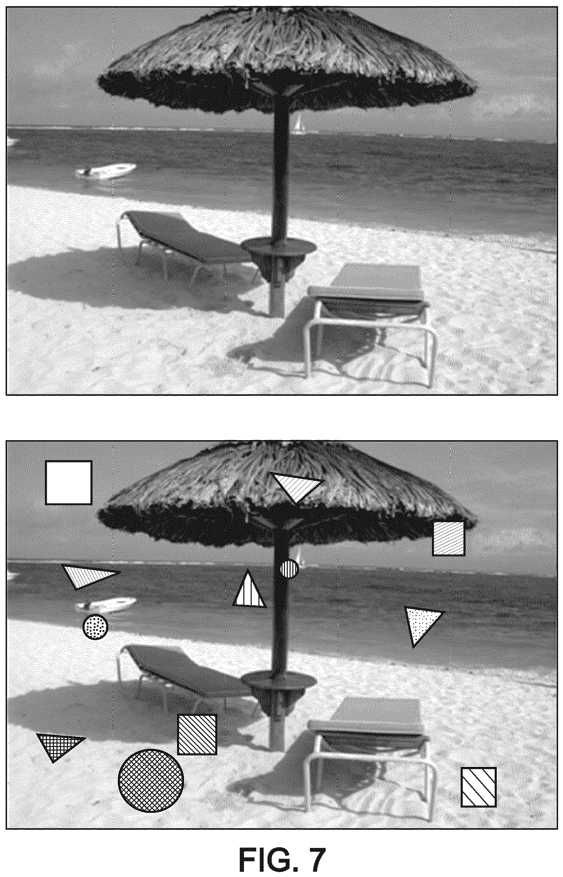

La figure 7 illustre une autre transformation d'image consistant à modifier une image source (l'image du haut, en l'occurrence la photographie de deux chaises longues et d'un parasol sur une plage) en incrustant trois disques dans l'image. L'utilisateur a donc préalablement défini la transformation en requérant l'incrustation de trois disques au sein de l'image. La taille des disques est choisie aléatoirement. Pour rendre la transformation plus complexe à deviner par un tiers espionnant éventuellement des échanges, le dispositif électronique sécurisé est agencé pour ajouter de nombreux autres éléments (mais pas d'autres disques), de façon complètement aléatoire. L'utilisateur doit vérifier que parmi tous les éléments ajoutés, il y a bien trois disques. Sur la figure 7, la couleur n'étant pas autorisée, les couleurs de la photographie sont représentées en teintes de gris et les couleurs des surfaces des éléments ajoutés sont représentées schématiquement par différents types de hachures (points, segments, quadrillages).

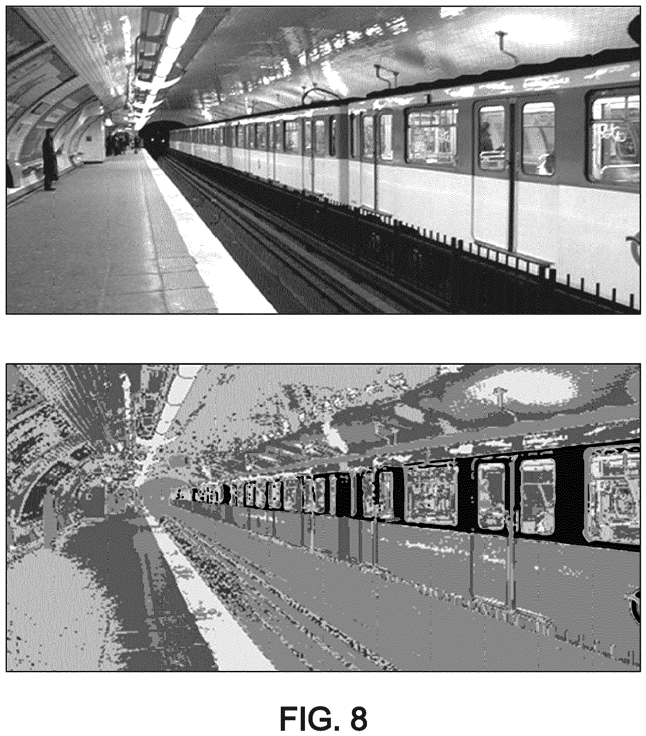

La figure 8 illustre une autre transformation d'image consistant à modifier une image source (l'image du haut, en l'occurrence la photographie d'un métro dans une station de métro à Paris) en effectuant un seuillage de l'image (seuillage de l'histogramme des couleurs) puis en remplaçant la couleur dominante par une couleur prédéfinie par l'utilisateur. L'utilisateur peut ainsi vérifier que la couleur dominante de l'image est bien remplacée par la couleur qu'il a définie. Les autres couleurs peuvent être définies aléatoirement. Sur la figure 8, la couleur n'étant pas autorisée, les couleurs de la photographie sont représentées en teintes de gris et les couleurs seuillées de la photographie du bas sont représentées également par des teintes de gris. Dans la réalité, les couleurs seuillées sont plus facilement identifiables que des teintes de gris (par exemple: orange, jaune, vert, bleu, rouge, blanc, gris).

Un premier mode de réalisation concerne un procédé d'authentification d'un dispositif électronique sécurisé BNK_SRV. Le dispositif électronique sécurisé BNK_SRV est par exemple un serveur permettant d'effectuer des transactions bancaires, ou tout autre serveur, voire un dispositif client sécurisé (tel qu'un ordinateur personnel ou un téléphone portable protégé par un circuit électronique sécurisé selon un mode de réalisation de l'invention).

L'authentification s'opère depuis un dispositif électronique non sécurisé (tel qu'un ordinateur personnel PC, ou un smartphone SP) apte à communiquer (par exemple en mode client serveur, ou en pair à pair centralisé ou décentralisé) avec le dispositif électronique sécurisé. Le dispositif électronique non sécurisé comprend un périphérique d'entrée (tel qu'un clavier KBD, une souris MS, un écran tactile TS, un micro MIC et/ou un appareil photo CAM). Il comprend aussi un périphérique de sortie (tel qu'un écran SCR éventuellement tactile TS, un haut parleur SPK, et/ou une imprimante PRN). Il comprend enfin un circuit électronique sécurisé TPM. Ce circuit électronique sécurisé TPM permet de mettre en place un environnement d'exécution sécurisée (désigné sous l'acronyme TEE). Selon une mise en oeuvre possible, ce circuit électronique sécurisé est un circuit autonome. Selon une mise en oeuvre alternative, ce circuit électronique sécurisé est un sous ensemble sécurisé d'un circuit électronique non sécurisé, par exemple un sous ensemble sécurisé avec cloisonnement d'exécution d'un processeur (par exemple via la technologie TrustZone® de la société ARM, disponible notamment sur les produits ARM Cortex-A57, ARM Cortex-A53, ARM Cortex-A15, ARM Cortex-A12, ARM Cortex-A9, ARM Cortex-A8, ARM Cortex-A7, ARM Cortex-A5 ou encore ARM1176).

Le procédé comprend une prise de contrôle CTRL du périphérique d'entrée (ou de plusieurs ou tous d'entre eux) et du périphérique de sortie (ou de plusieurs ou tous d'entre eux) par le circuit électronique sécurisé TPM. Cette prise de contrôle comprend par exemple une interdiction d'accès des périphériques concernés au processeur principal du dispositif électronique non sécurisé, l'accès étant réservé au circuit électronique sécurisé TPM. Par exemple, les différents périphériques peuvent être reliés par des bus au circuit électronique sécurisé TPM (et non pas au processeur principal directement), et le TPM peut être connecté au processeur principal, et autoriser ou non la communication depuis/vers les périphériques. Alternativement les périphériques peuvent être connectés via des bus au processeur principal mais les bus comprennent alors des moyens de déconnexion activables par le circuit électronique sécurisé et empêchant le processeur principal (et donc les logiciels malveillants éventuellement exécutés par le processeur principal) d'accéder aux périphériques. Cette prise de contrôle comprend également la faculté pour le circuit électronique sécurisé TPM d'envoyer et recevoir des informations depuis les périphériques concernés (par exemple via les bus précités).

Le procédé comprend une ouverture OSS de session sécurisée (par exemple une session de réseau privé virtuel VPN, ou une session http sécurisée TLS) par le circuit électronique sécurisé TPM avec le dispositif électronique sécurisé BNK_SRV. Il s'agit par exemple d'une session sécurisée de bout en bout (aucun équipement intermédiaire entre le circuit électronique sécurisé et le dispositif électronique sécurisé n'étant alors susceptible d'accéder au contenu de la session). Selon une mise en oeuvre possible, la session sécurisée est sécurisée par signature électronique des données échangées et/ou par chiffrement de ces données. Selon une mise en oeuvre possible, les paramètres de chiffrement et/ou de signature ainsi que, le cas échéant, d'autres paramètres d'ouverture de session, sont définis lors d'une phase d'enrôlement décrite ci-après. Le circuit électronique sécurisé TPM prend par exemple le contrôle d'une carte réseau (entendu au sens large, et couvrant notamment des cartes Ethernet, WiFi, 3G, 4G, bluetooth ou autres) du dispositif électronique non sécurisé, et établit la session sécurisée via cette carte réseau avec le dispositif électronique sécurisé concerné. Selon une mise en oeuvre possible, le dispositif électronique sécurisé est agencé pour n'accepter d'ouvrir une session sécurisée qu'avec un circuit électronique sécurisé convenablement authentifié. Selon une mise en oeuvre possible, le procédé comprend à cette fin une authentification mutuelle du circuit électronique sécurisé et du dispositif électronique sécurisé. Selon une mise en oeuvre possible, le dispositif électronique sécurisé exige non seulement que le circuit électronique sécurisé soit authentifié, mais qu'il appartienne à une catégorie prédéfinie et acceptée. Par exemple, l'ouverture de la session sécurisée est subordonnée à une authentification (par exemple de type PKI) du circuit électronique sécurisé, et le dispositif électronique sécurisé vérifie que le certificat du circuit électronique sécurisé, en plus d'être valide, est émis par une autorité de certification reconnue à cet effet (et non par une autorité de certification quelconque), et/ou que le certificat comprend certains attributs particuliers (tels qu'un attribut spécifiant que le certificat est approuvé pour une utilisation dans le cadre d'une ouverture de session sécurisée selon le premier mode de réalisation de l'invention).

Le procédé comprend une acquisition ACQ, par le circuit électronique sécurisé TPM, d'une information d'utilisateur (par exemple une image IMG, un son, des séries de vibrations, etc.). Selon une mise en oeuvre possible, l'information d'utilisateur est une information sélectionnée par un utilisateur (humain) du dispositif électronique non sécurisé parmi des informations disponibles (par exemple parmi des fichiers stockés sur le dispositif électronique non sécurisé), ou est une information générée par l'utilisateur. Selon une mise en oeuvre possible, l'utilisateur reçoit pour instruction de choisir une information d'utilisateur arbitraire (de préférence différente à chaque fois de façon à éviter les rejeux, c'est-à-dire à usage unique). Selon une mise en oeuvre possible, l'utilisateur reçoit pour instruction (combinable avec l'instruction de la phrase précédente) de choisir une information d'utilisateur qui, en plus d'être restituable par un périphérique de sortie du dispositif électronique non sécurisé, est facilement appréhendable par cet utilisateur. Selon une mise en oeuvre possible, l'information d'utilisateur est arbitraire et/ou à usage unique et/ou facilement appréhendable par un utilisateur humain. Selon une mise en oeuvre possible, l'acquisition ACQ s'opère via un périphérique contrôlé par le circuit électronique sécurisé, ou du moins dans le périmètre d'un environnement d'exécution de confiance TEE (supervisé par ledit circuit).

Le procédé comprend une transmission SND, par le circuit électronique sécurisé TPM au dispositif électronique sécurisé BNK_SRV, de l'information d'utilisateur. Selon une mise en oeuvre possible, cette transmission s'effectue via la session sécurisée établie précédemment, de sorte que les tiers ne peuvent intercepter l'information d'utilisateur lors de son transfert du dispositif électronique sécurisé au circuit électronique sécurisé. Il s'agit alors d'une double sécurité puisque comme ce sera exposé ci-après, même si l'information d'utilisateur tombait entre les mains d'un attaquant, elle ne serait (selon certaines mises en oeuvre du moins) pas exploitable.

Le procédé comprend une réception RCPT, par le circuit électronique sécurisé TPM, d'une information d'utilisateur transformée TRN_IMG issue d'une transformation prédéterminée appliquée par le dispositif électronique sécurisé BNK_SRV à l'information d'utilisateur IMG. Selon une mise en oeuvre possible, cette transformation prédéterminée fait partie d'un ensemble de transformations prédéterminées et est sélectionnée par l'utilisateur lors d'une phase d'enrôlement préalable. Par exemple, l'utilisateur se rend à son agence bancaire et effectue la sélection précitée via un terminal sécurisé disponible en agence, ledit terminal transmettant la sélection de façon sécurisée au dispositif électronique sécurisé BNK_SRV. Alternativement, le circuit électronique sécurisé TPM stocke par avance la liste des transformations prédéterminées possibles. Selon cette alternative, l'utilisateur opère alors localement (initialement, puis à chaque fois qu'il souhaite modifier son choix de transformations) la sélection précitée, depuis son dispositif électronique non sécurisé, sous le contrôle du circuit électronique sécurisé TPM (qui transmet ladite sélection au dispositif électronique sécurisé BNK_SRV). L'utilisateur n'est ainsi pas obligé de se déplacer dans une agence bancaire. Selon une mise en oeuvre possible, l'utilisateur sélectionne lors d'une phase d'enrôlement préalable plusieurs transformations prédéterminées. Selon une mise en oeuvre possible, la (ou les) transformation(s) sélectionnée(s) est (sont) telle(s) qu'elle(s) est (sont) difficile(s) à déterminer sur la seule base d'une information d'utilisateur donnée et du résultat de cette (ces) transformation(s) appliquée(s) à cette information d'utilisateur. Selon une mise en oeuvre possible, la (ou les) transformation est (sont) telle(s) qu'elle(s) est (sont) difficile(s) à déterminer sur la seule base d'un ensemble d'informations d'utilisateur et des résultats de cette (ces) transformation(s) appliquée(s) aux informations d'utilisateur de cet ensemble. Selon une mise en oeuvre possible, le dispositif électronique sécurisé BNK_SRV choisit aléatoirement une transformation prédéterminée parmi celles sélectionnées par l'utilisateur lors de la phase d'enrôlement (lorsque plusieurs ont été sélectionnées lors de l'enrôlement). Disposer de plusieurs transformations prédéterminées possibles rend plus difficile l'attaque par un tiers mal intentionné quand bien même ce tiers réussirait à accéder à la fois à plusieurs informations d'utilisateur et aux informations d'utilisateur transformées correspondantes. En effet, le tiers aurait beaucoup plus de mal à déterminer une transformation, alors que les données interceptées sont statistiquement issues de plusieurs transformations (non identifiées). Ceci impose cependant à l'utilisateur humain de s'attendre à plusieurs transformations possibles et de reconnaître n'importe laquelle des transformations qu'il a sélectionnées pendant l'enrôlement comme étant une transformation valide.

Le procédé comprend un envoi DSPL par le circuit électronique sécurisé TPM au périphérique de sortie contrôlé par le circuit électronique sécurisé TPM de l'information d'utilisateur transformée TRN_IMG. Selon une mise en oeuvre possible, l'envoi s'opère à destination de plusieurs périphériques. Par exemple l'information d'utilisateur transformée peut comprendre (ou consister en) une vidéo affichée sur un écran accompagnée d'un son correspondant simultanément diffusé sur un haut parleur.

Le procédé comprend une obtention OBT d'une information d'authentification OK_NOK (pouvant signaler soit une authentification, OK, soit un défaut d'authentification, NOK) par le circuit électronique sécurisé TPM depuis le périphérique d'entrée contrôlé par le circuit électronique sécurisé TPM. Ainsi, un utilisateur humain reconnaissant que l'information d'utilisateur transformée qui lui a été communiquée correspond bien à l'information d'utilisateur qu'il a fait parvenir au dispositif électronique non sécurisé lors de la phase d'acquisition, conclut qu'il communique bien avec le dispositif électronique sécurisé, et en conséquence il peut utiliser un périphérique d'entrée pour introduire une information signalant qu'il reconnaît l'information d'utilisateur transformée (ou dans le cas contraire une information signalant qu'il ne reconnaît pas l'information d'utilisateur transformée).

Le procédé comprend alors une authentification AUTH, par le circuit électronique sécurisé TPM, du dispositif électronique sécurisé BNK_SRV en fonction de l'information d'authentification OK_NOK obtenue.

Si l'authentification est réussie, une transaction (par exemple un virement bancaire ou toute opération sensible rendue possible via le dispositif électronique sécurisé BNK_SRV) peut être effectuée via la session sécurisée en utilisant les périphériques contrôlés par le circuit électronique sécurisé. Selon une mise en oeuvre possible, la transaction comprend une visualisation (via un périphérique de sortie contrôlé par le circuit électronique sécurisé), suivie d'une validation (via un périphérique d'entrée contrôlé par le circuit électronique sécurisé) et éventuellement précédée d'une saisie (via un périphérique d'entrée contrôlé par le circuit électronique sécurisé), d'informations représentatives de la transaction (telles qu'un montant de transaction, une identification des participants à la transaction, etc.). Selon une mise en oeuvre possible, la validation comprend une saisie d'informations personnelles ou confidentielles (code PIN, etc.) via un périphérique d'entrée contrôlé par le circuit électronique sécurisé.

L'étape SND intervient après l'étape ACQ. L'étape RCPT intervient après l'étape SND. L'étape DSPL intervient après l'étape RCPT et après l'étape CTRL. L'étape OBT intervient après l'étape DSPL. L'étape AUTH intervient après l'étape OBT.

Selon un deuxième mode de réalisation, l'information d'utilisateur d'un procédé d'authentification selon le premier mode de réalisation est une photographie IMG.

Selon un troisième mode de réalisation, un procédé d'authentification selon le deuxième mode de réalisation comprend une prise de la photographie IMG par un périphérique d'entrée CAM du dispositif électronique non sécurisé SP. Un utilisateur peut ainsi utiliser un appareil photo CAM intégré à son smartphone SP pour prendre une photo quelconque (dans son environnement), et vérifier si le traitement opéré sur cette photo par une transformation qu'il a prétendument sélectionnée est bien celui (ou l'un de ceux) au(x)quel(s) il s'attend. Selon une mise en oeuvre possible, l'appareil photo est contrôlé par le circuit électronique de sécurité (c'est-à-dire par exemple qu'il est déconnecté du processeur principal par ledit circuit) de façon à ce qu'il n'y ait pas de doute sur le fait que c'est bien la photo prise par l'utilisateur qui est transmise audit circuit. Il s'agit là d'une double sécurité car même si un attaquant opérait une substitution, le résultat serait que l'information d'utilisateur transformée ne correspondrait pas à l'information d'utilisateur que l'utilisateur pense avoir transmise.

Selon un quatrième mode de réalisation, un procédé d'authentification selon l'un des modes de réalisation précédents comprend une libération REL du périphérique d'entrée (par exemple un clavier KBD, une souris MS, un écran tactile TS et/ou un appareil photo CAM) et du périphérique de sortie (par exemple un écran SCR, un haut parleur SPK ou une imprimante PRN) par le circuit électronique sécurisé TPM. La libération comprend une cessation du contrôle consécutif à la prise de contrôle. La libération du périphérique de sortie est précédée d'un envoi DSPL_LV par le circuit électronique sécurisé TPM d'une information de libération SEC_MSG audit périphérique de sortie. Ainsi, si un attaquant parvient à ordonner au circuit électronique sécurisé de quitter le mode contrôlé, le circuit électronique sécurisé TPM notifiera de toute façon la sortie de ce mode (par exemple à l'aide d'un message affiché sur un écran). Selon une mise en oeuvre, le circuit électronique sécurisé ne libère les périphériques qu'au-delà d'un délai prédéfini (par exemple 1s). Ceci assure que le message de libération sera diffusé pendant au moins le délai en question (et sera donc visible par l'utilisateur). Selon une mise en oeuvre possible (combinable avec la précédente), l'utilisateur doit autoriser la sortie du mode contrôlé de façon sécurisée, par exemple via un périphérique d'entrée KBD contrôlé CTRL par le circuit électronique sécurisé TPM (afin qu'une sortie du mode contrôlé ne soit pas possible ou du moins plus difficile sans accord de l'utilisateur).

Ceci est avantageux car cela évite à l'utilisateur de penser qu'il se trouve dans un mode contrôlé alors que ça n'est plus le cas. La solution inverse (notifier l'utilisateur de l'entrée en mode contrôlé) ne présente pas d'intérêt car un attaquant pourrait simuler le message d'entrée en mode contrôlé tout en restant en mode non contrôlé (grâce à la maîtrise des périphériques de sortie en mode non contrôlé).

L'étape REL intervient après l'étape AUTH.

Selon un cinquième mode de réalisation, un circuit électronique sécurisé TPM est agencé pour être installé dans un dispositif électronique non sécurisé (par exemple un ordinateur personnel PC ou un smartphone SP) comprenant un périphérique d'entrée (par exemple KBD, MS, TS et/ou CAM) et un périphérique de sortie (par exemple SCR, SPK et/ou PRN).

Le circuit électronique sécurisé TPM comprend un circuit électronique de prise de contrôle CTRL_C du périphérique d'entrée et du périphérique de sortie.

Le circuit électronique sécurisé TPM comprend un circuit électronique d'ouverture OSS_C de session sécurisée avec un dispositif électronique sécurisé BNK_SRV.

Le circuit électronique sécurisé TPM comprend un circuit électronique d'acquisition ACQ_C d'une information d'utilisateur IMG.

Le circuit électronique sécurisé TPM comprend un circuit électronique de transmission SND_C au dispositif électronique sécurisé BNK_SRV, de l'information d'utilisateur IMG.

Le circuit électronique sécurisé TPM comprend un circuit électronique de réception RCPT_C d'une information d'utilisateur transformée TRN_IMG issue d'une transformation prédéterminée appliquée par le dispositif électronique sécurisé BNK_SRV à l'information d'utilisateur IMG.

Le circuit électronique sécurisé TPM comprend un circuit électronique d'envoi DSPL_C au périphérique de sortie contrôlé par le circuit électronique sécurisé TPM de l'information d'utilisateur transformée TRN_IMG.

Le circuit électronique sécurisé TPM comprend un circuit électronique d'obtention OBT_C d'une information d'authentification OK_NOK depuis le périphérique d'entrée contrôlé par le circuit électronique sécurisé TPM.

Le circuit électronique sécurisé TPM comprend un circuit électronique d'authentification AUTH_C du dispositif électronique sécurisé BNK_SRV en fonction de l'information d'authentification OK_NOK obtenue.

Selon une mise en oeuvre possible, le circuit électronique de prise de contrôle CTRL_C, le circuit électronique d'ouverture OSS_C, le circuit électronique d'acquisition ACQ_C, le circuit électronique de transmission SND_C, le circuit électronique de réception RCPT_C, le circuit électronique d'envoi DSPL_C, le circuit électronique d'obtention OBT_C et le circuit électronique d'authentification AUTH_C sont huit circuits électroniques dédiés et distincts, conçus par exemple sur la base d'ASICs ou de FPGAs. Selon une mise en oeuvre possible, ces huit circuits comprennent chacun au moins un processeur et une mémoire stockant un programme agencé pour mettre en oeuvre la fonction respective précitée (associée au circuit respectif parmi les huit circuits) lorsqu'il est exécuté par ledit processeur. Selon une mise en oeuvre possible tout ou partie de ces huit circuits partage un processeur commun. Selon une mise en oeuvre possible dans laquelle ces huit circuits comprennent chacun une mémoire stockant un programme, ces huit circuits comprennent également chacun un processeur (éventuellement commun à tout ou partie des huit circuits) constituant un composant discret distinct (et séparé) de la mémoire respective, éventuellement commune à tout ou partie des huit différents circuits. Selon une mise en oeuvre possible, la mémoire éventuellement commune de tout ou partie de ces huit circuits est au moins pour partie une mémoire standard du dispositif électronique non sécurisé (telle qu'une mémoire d'ordinateur personnel ou de smartphone), chiffrée par une clé cryptographique stockée dans une partie du circuit électronique sécurisé propre audit circuit électronique sécurisé (c'est-à-dire non partagée avec des composants du dispositif électronique non sécurisé). En d'autres termes, selon cette dernière mise en oeuvre, un circuit électronique sécurisé peut utiliser (et même comprendre, au sens du présent mode de réalisation) une partie de la mémoire du dispositif électronique non sécurisé dans lequel il a vocation à être installé (afin d'étendre sa propre mémoire) à condition que cette partie de mémoire soit chiffrée d'une manière inaccessible au dispositif électronique non sécurisé et en particulier à son processeur principal. Cette partie de mémoire (ainsi que les informations chiffrées qui y sont stockées) est alors commune au circuit électronique sécurisé et au dispositif électronique non sécurisé.

Selon un sixième mode de réalisation, l'information d'utilisateur IMG d'un circuit électronique sécurisé TPM selon le cinquième mode de réalisation est une photographie.

Selon un septième mode de réalisation, un dispositif électronique non sécurisé SP comprend un circuit électronique sécurisé TPM selon le sixième mode de réalisation et un périphérique d'entrée CAM agencé pour prendre la photographie IMG.

Un autre mode de réalisation se rapporte à un système comprenant un dispositif électronique non sécurisé comprenant un circuit électronique sécurisé selon un mode de réalisation de l'invention, et un dispositif électronique sécurisé selon un mode de réalisation de l'invention.

Selon un huitième mode de réalisation, un circuit électronique sécurisé TPM selon le cinquième ou sixième mode de réalisation comprend un circuit électronique de libération REL_C du périphérique d'entrée et du périphérique de sortie, agencé pour envoyer une information de libération SEC_MSG audit périphérique de sortie avant de le libérer.

Selon une mise en oeuvre possible, le circuit électronique de libération REL_C est un circuit électronique dédié et distinct des huit circuits électroniques précités, conçu par exemple sur la base d'un ou plusieurs ASICs et/ou FPGAs. Selon une mise en oeuvre possible, ce neuvième circuit comprend au moins un processeur et une mémoire stockant un programme agencé pour mettre en oeuvre la fonction respective précitée (associée à ce neuvième circuit) lorsqu'il est exécuté par ledit processeur. Selon une mise en oeuvre possible ce neuvième circuit électronique partage un processeur commun avec tout ou partie de ces huit circuits. Selon une mise en oeuvre possible dans laquelle ces neuf circuits comprennent chacun une mémoire stockant un programme, ces neuf circuits comprennent également chacun un processeur (éventuellement commun à tout ou partie des neuf circuits) constituant un composant discret distinct (et séparé) de la mémoire respective, éventuellement commune à tout ou partie des neuf différents circuits. Selon une mise en oeuvre possible, la mémoire éventuellement commune de tout ou partie de ces neuf circuits est au moins pour partie une mémoire standard du dispositif électronique non sécurisé (telle qu'une mémoire d'ordinateur personnel ou de smartphone), chiffrée par une clé cryptographique stockée dans une partie du circuit électronique sécurisé propre audit circuit électronique sécurisé (c'est-à-dire non partagée avec des composants du dispositif électronique non sécurisé).

Selon un neuvième mode de réalisation, un programme d'ordinateur comprend une série d'instructions qui, lorsqu'elles sont exécutées par un (ou plusieurs) processeur(s), mettent en oeuvre le procédé selon l'un des premier au quatrième modes de réalisation. Ce programme d'ordinateur peut être écrit notamment en assembleur, en langage C, ou dans tout autre langage de programmation approprié.

Selon un dixième mode de réalisation, un support de stockage non transitoire lisible par ordinateur stocke un programme d'ordinateur selon le neuvième mode de réalisation. Ce support de stockage est par exemple une mémoire non volatile de type EEPROM, ROM, Flash, RAM sauvegardée par batterie, ou encore un support magnétique ou optique. Il peut s'agir notamment d'une carte mémoire propriétaire ou standard (par exemple de type microSD). Selon une mise en oeuvre possible, ce programme est stocké sous forme chiffrée déchiffrable par le circuit électronique de sécurité mais pas par le dispositif électronique non sécurisé (et en particulier pas par son processeur principal).

Des exemples de transformations possibles sont fournis ci-dessous.

Une transformation possible consiste en l'application d'une détection de contour (permettant d'identifier des arêtes dans l'image), suivie d'un coloriage des arêtes comprises dans une certaine plage d'angles avec une couleur fournie par l'utilisateur lors de l'enrôlement. Pour réduire les risques de reproduction de cette transformation par un tiers espionnant physiquement l'utilisateur en train de se servir de son équipement mobile, les autres arêtes peuvent être coloriées avec des couleurs aléatoirement choisies.

Une transformation possible consiste en l'application d'un filigrane (plus connu sous son nom anglais de watermark) à une position choisie par l'utilisateur lors de l'enrôlement. L'écran est partitionné en zone et à chaque zone, on associe un code ou mot clé d'indication de localisation spatiale (par exemple nord, sud, est, ouest et centre) permettant d'identifier la zone. L'utilisateur choisit la zone où le watermark doit être inséré en sélectionnant le mot clé correspondant. Selon un mode de réalisation, pour réduire les risques de reproduction de cette transformation par un tiers espionnant physiquement l'utilisateur en train de se servir de son dispositif électronique non sécurisé, des watermarks aléatoires sont placés sur des zones autres que celle ciblée.

Une transformation possible consiste à incruster n (n est saisi lors de l'enrôlement) fois un objet choisi à l'image parmi une liste d'objets prédéfinie. Par exemple, des formes géométriques (triangle, cercle, carré, trapèze). Pour réduire les risques de reproduction de cette transformation par un tiers espionnant physiquement l'utilisateur en train de se servir de son équipement mobile, d'autres formes géométriques sont incrustées en nombre aléatoire.

Une transformation possible consiste en un seuillage de l'histogramme des couleurs. Une couleur préalablement définie est alors remplacée par une couleur saisie par exemple lors de l'enrôlement. Pour réduire les risques de reproduction de cette transformation par un tiers espionnant physiquement l'utilisateur en train de se servir de son équipement mobile, les autres couleurs sont également modifiées.

Une transformation possible consiste en une définition d'un système de signature et de chiffrement. Par exemple, des méthodes classiques de signature et de chiffrement sont mises en places. Un système s'appuyant sur une infrastructure à clé publique est utilisé. Le service fournit à L'utilisateur sa clé publique et son certificat valide. L'utilisateur, quant à lui, génère sa bi-clé et la fait certifier par le service. En lieu et place de l'utilisation d'une PKI, des techniques de signature par watermark et de chiffrement d'image utilisant des transformations bijectives d'images de type Boulanger, Peano, Hilbert ou autres sont possibles. Cette dernière technique nécessite uniquement l'échange d'une séquence de transformations et de nombre de cycle à effectuer.

Afin de prévenir un tiers malveillants de mettre en oeuvre des techniques d'hameçonnage, et de la même manière qu'un utilisateur de carte bancaire ne doit pas divulguer son code PIN, l'utilisateur de ce système doit prendre garde à ne pas exposer l'image reçue. Les techniques de dissimulation (obfuscation en anglais) employées ici empêchent à un tiers de découvrir le procédé de transformation s'il voit un nombre limité de fois les images transformées. Afin de rendre encore plus difficile la découverte de la transformation, on ajoute au défit constitué par l'image un paramètre qui permet de faire varier la transformation (couleur, zone de l'écran, nombre).

Pour empêcher l'utilisateur de présenter plusieurs fois la même donnée numérique, le service peut mettre en place un système de type anti-latence notamment grâce à la signature de l'image transmise par l'utilisateur au service.

Bien entendu, la présente invention ne se limite pas à la forme de réalisation décrite ci-avant à titre d'exemple ; elle s'étend à d'autres variantes.

Ainsi, il a été décrit ci-avant un procédé opérant avec un dispositif électronique sécurisé tel qu'un serveur permettant des transactions bancaires (auquel un dispositif électronique non sécurisé tel qu'un smartphone peut se connecter via par exemple un réseau tel que l'Internet). Cependant, l'invention s'applique à tout type de serveur pertinent, et même à d'autre dispositifs électroniques (tels que des dispositifs capables d'opérer en P2P avec le dispositif électronique non sécurisé). De même, le dispositif électronique non sécurisé a été présenté comme pouvant être un ordinateur personnel ou un smartphone, mais il peut évidemment s'agir d'un dispositif électronique de type différent (par exemple une tablette connectée, un lecteur mp3 connecté, un PDA connecté, une liseuse connectée, etc.). De même, d'autres types d'informations d'utilisateur que celles énumérées ci-dessus peuvent être utilisées, notamment le son, avec des paroles, ou bien des mouvements grâce à un gyroscope embarqué, ou bien des tracés sur le l'écran tactile, ou encore des mimiques faites devant la caméra embarquée peuvent être utilisées.

## Revendications

1. Procédé d'authentification d'un dispositif électronique sécurisé (BNK_SRV) depuis un dispositif électronique non sécurisé (PC, SP) comprenant un périphérique d'entrée (KBD, MS, TS, CAM, MIC), un périphérique de sortie (SCR, SPK, PRN, TS) et un circuit électronique sécurisé (TPM), le procédé comprenant :
/a/ une prise de contrôle (CTRL) du périphérique d'entrée (KBD, MS, TS, CAM, MIC) et du périphérique de sortie (SCR, SPK, PRN, TS) par le circuit électronique sécurisé (TPM) ;
/b/ une ouverture (OSS) de session sécurisée (VPN, TLS) par le circuit électronique sécurisé (TPM) avec le dispositif électronique sécurisé (BNK SRV) ;
/c/ une acquisition (ACQ), par le circuit électronique sécurisé (TPM), d'une information d'utilisateur (IMG) ;
/d/ une transmission (SND), par le circuit électronique sécurisé (TPM) au dispositif électronique sécurisé (BNK_SRV), de l'information d'utilisateur (IMG) ;
/e/ une réception (RCPT), par le circuit électronique sécurisé (TPM), d'une information d'utilisateur transformée (TRN_IMG) issue d'une transformation prédéterminée appliquée par le dispositif électronique sécurisé (BNK_SRV) à l'information d'utilisateur (IMG) ;
/f/ un envoi (DSPL) par le circuit électronique sécurisé (TPM) au périphérique de sortie (SCR, SPK, PRN, TS) contrôlé par le circuit électronique sécurisé (TPM) de l'information d'utilisateur transformée (TRN_IMG) ;
/g/ une obtention (OBT) d'une information d'authentification (OK_NOK) par le circuit électronique sécurisé (TPM) depuis le périphérique d'entrée (KBD, MS, TS) contrôlé par le circuit électronique sécurisé (TPM) ;
/h/ une authentification (AUTH), par le circuit électronique sécurisé (TPM), du dispositif électronique sécurisé (BNK_SRV) en fonction de l'information d'authentification (OK_NOK) obtenue.

2. Procédé d'authentification selon la revendication 1, dans lequel l'information d'utilisateur (IMG) est une photographie.

3. Procédé d'authentification selon la revendication 2, comprenant une prise de la photographie (IMG) par un périphérique d'entrée (CAM) du dispositif électronique non sécurisé (SP).

4. Procédé d'authentification selon l'une des revendications précédentes, comprenant une libération (REL) du périphérique d'entrée (KBD, MS, TS, CAM, MIC) et du périphérique de sortie (SCR, SPK, PRN, TS) par le circuit électronique sécurisé (TPM), la libération du périphérique de sortie (SCR, SPK, PRN) étant précédée d'un envoi (DSPL_LV) par le circuit électronique sécurisé (TPM) d'une information de libération (SEC_MSG) audit périphérique de sortie (SCR, SPK, PRN, TS).

5. Circuit électronique sécurisé (TPM) agencé pour être installé dans un dispositif électronique non sécurisé (PC, SP) comprenant un périphérique d'entrée (KBD, MS, TS, CAM, MIC) et un périphérique de sortie (SCR, SPK, PRN, TS), le circuit électronique sécurisé (TPM) comprenant :
un circuit électronique de prise de contrôle (CTRL_C) du périphérique d'entrée (KBD, MS, TS, CAM, MIC) et du périphérique de sortie (SCR, SPK, PRN, TS) ;
un circuit électronique d'ouverture (OSS_C) de session sécurisée (VPN, TLS) avec un dispositif électronique sécurisé (BNK_SRV) ;
un circuit électronique d'acquisition (ACQ_C) d'une information d'utilisateur (IMG) ;
un circuit électronique de transmission (SND_C) au dispositif électronique sécurisé (BNK_SRV), de l'information d'utilisateur (IMG) ;
un circuit électronique de réception (RCPT_C) d'une information d'utilisateur transformée (TRN_IMG) issue d'une transformation prédéterminée appliquée par le dispositif électronique sécurisé (BNK_SRV) à l'information d'utilisateur (IMG) ;
un circuit électronique d'envoi (DSPL_C) au périphérique de sortie (SCR, SPK, PRN, TS) contrôlé par le circuit électronique sécurisé (TPM) de l'information d'utilisateur transformée (TRN_IMG) ;
un circuit électronique d'obtention (OBT_C) d'une information d'authentification (OK_NOK) depuis le périphérique d'entrée (KBD, MS, TS) contrôlé par le circuit électronique sécurisé (TPM) ;
un circuit électronique d'authentification (AUTH_C) du dispositif électronique sécurisé (BNK_SRV) en fonction de l'information d'authentification (OK_NOK) obtenue.

6. Circuit électronique sécurisé (TPM) selon la revendication 5, dans lequel l'information d'utilisateur (IMG) est une photographie.

7. Dispositif électronique non sécurisé (SP) comprenant un circuit électronique sécurisé (TPM) selon la revendication 6 et un périphérique d'entrée (CAM) agencé pour prendre la photographie (IMG).

8. Circuit électronique sécurisé (TPM) selon la revendication 5 ou 6, comprenant un circuit électronique de libération (REL_C) du périphérique d'entrée (KBD, MS, TS, CAM) et du périphérique de sortie (SCR, SPK, PRN), agencé pour envoyer une information de libération (SEC_MSG) audit périphérique de sortie (SCR, SPK, PRN) avant de le libérer.

9. Programme d'ordinateur comprenant une série d'instructions qui, lorsqu'elles sont exécutées par un processeur, mettent en oeuvre le procédé selon l'une des revendications 1 à 4.

10. Support de stockage non transitoire lisible par ordinateur stockant un programme d'ordinateur selon la revendication 9.

## Patentansprüche

1. Verfahren zur Authentifizierung einer gesicherten elektronischen Vorrichtung (BNK_SRV) von einer nicht gesicherten elektronischen Vorrichtung (PC, SP) aus, umfassend ein Eingabe-Peripheriegerät (KBD, MS, TS, CAM, MIC), ein Ausgabe-Peripheriegerät (SCR, SPK, PRN, TS) und eine gesicherte elektronische Schaltung (TPM), wobei das Verfahren umfasst:
a. eine Übernahme der Steuerung (CTRL) des Eingabe-Peripheriegeräts (KBD, MS, TS, CAM, MIC) und des Ausgabe-Peripheriegeräts (SCR, SPK, PRN, TS) durch die gesicherte elektronische Schaltung (TPM);
b. eine Eröffnung (OSS) einer gesicherten Sitzung (VPN, TLS) mit der gesicherten elektronischen Vorrichtung (BNK_SRV) durch die gesicherte elektronische Schaltung (TPM);
c. eine Erfassung (ACQ) einer Benutzerinformation (IMG) durch die gesicherte elektronische Schaltung (TPM);
d. eine Übertragung (SND) der Benutzerinformation (IMG) zu der gesicherten elektronischen Vorrichtung (BNK_SRV) durch die gesicherte elektronische Schaltung (TPM);
e. einen durch die gesicherte elektronische Schaltung (TPM) erfolgenden Empfang (RCPT) einer transformierten Benutzerinformation (TRN_IMG), die aus einer vorbestimmten Transformation hervorgegangen ist, die von der gesicherten elektronischen Vorrichtung (BNK_SRV) an der Benutzerinformation (IMG) vorgenommen wurde;
f. eine durch die gesicherte elektronische Schaltung (TPM) erfolgende Sendung (DSPL) der transformierten Benutzerinformation (TRN_IMG) an das Ausgabe-Peripheriegerät (SCR, SPK, PRN, TS), das durch die gesicherte elektronische Schaltung (TPM) gesteuert wird;
g. einen Erhalt (OBT) einer Authentifizierungsinformation (OK_NOK) durch die gesicherte elektronische Schaltung (TPM) vom Eingabe-Peripheriegerät (KBD, MS, TS), das durch die gesicherte elektronische Schaltung (TPM) gesteuert wird;
h. eine durch die gesicherte elektronische Schaltung (TPM) erfolgende Authentifizierung (AUTH) der gesicherten elektronischen Vorrichtung (BNK_SRV) in Abhängigkeit von der erhaltenen Authentifizierungsinformation (OK_NOK).

2. Verfahren zur Authentifizierung nach Anspruch 1, wobei die Benutzerinformation (IMG) eine Fotografie ist.

3. Verfahren zur Authentifizierung nach Anspruch 2, umfassend eine Aufnahme der Fotografie (IMG) durch ein Eingabe-Peripheriegerät (CAM) der nicht gesicherten elektronischen Vorrichtung (SP).

4. Verfahren zur Authentifizierung nach einem der vorhergehenden Ansprüche, umfassend eine Freigabe (REL) des Eingabe-Peripheriegeräts (KBD, MS, TS, CAM, MIC) und des Ausgabe-Peripheriegeräts (SCR, SPK, PRN, TS) durch die gesicherte elektronische Schaltung (TPM), wobei der Freigabe des Ausgabe-Peripheriegeräts (SCR, SPK, PRN) eine durch die gesicherte elektronische Schaltung (TPM) erfolgende Sendung (DSPL_LV) einer Freigabeinformation (SEC_MSG) an das Ausgabe-Peripheriegerät (SCR, SPK, PRN, TS) vorangeht.

5. Gesicherte elektronische Schaltung (TPM), die dafür ausgelegt ist, in einer nicht gesicherten elektronischen Vorrichtung (PC, SP) installiert zu werden, die ein Eingabe-Peripheriegerät (KBD, MS, TS, CAM, MIC) und ein Ausgabe-Peripheriegerät (SCR, SPK, PRN, TS) umfasst, wobei die gesicherte elektronische Schaltung (TPM) umfasst:
eine elektronische Schaltung zur Übernahme der Steuerung (CTRL_C) des Eingabe-Peripheriegeräts (KBD, MS, TS, CAM, MIC) und des Ausgabe-Peripheriegeräts (SCR, SPK, PRN, TS);
eine elektronische Schaltung zur Eröffnung (OSS_C) einer gesicherten Sitzung (VPN, TLS) mit einer gesicherten elektronischen Vorrichtung (BNK_SRV);
eine elektronische Schaltung zur Erfassung (ACQ_C) einer Benutzerinformation (IMG);
eine elektronische Schaltung zur Übertragung (SND_C) der Benutzerinformation (IMG) an die gesicherte elektronische Vorrichtung (BNK_SRV);
eine elektronische Schaltung zum Empfang (RCPT_C) einer transformierten Benutzerinformation (TRN_IMG), die aus einer vorbestimmten Transformation hervorgegangen ist, die von der gesicherten elektronischen Vorrichtung (BNK_SRV) an der Benutzerinformation (IMG) vorgenommen wurde;
eine elektronische Schaltung zur Sendung (DSPL_C) der transformierten Benutzerinformation (TRN_IMG) an das Ausgabe-Peripheriegerät (SCR, SPK, PRN, TS), das durch die gesicherte elektronische Schaltung (TPM) gesteuert wird;
eine elektronische Schaltung zum Erhalt (OBT_C) einer Authentifizierungsinformation (OK_NOK) vom Eingabe-Peripheriegerät (KBD, MS, TS), das durch die gesicherte elektronische Schaltung (TPM) gesteuert wird;
eine elektronische Schaltung zur Authentifizierung (AUTH_C) der gesicherten elektronischen Vorrichtung (BNK_SRV) in Abhängigkeit von der erhaltenen Authentifizierungsinformation (OK_NOK).

6. Gesicherte elektronische Schaltung (TPM) nach Anspruch 5, wobei die Benutzerinformation (IMG) eine Fotografie ist.

7. Nicht gesicherte elektronische Vorrichtung (SP), umfassend eine gesicherte elektronische Schaltung (TPM) nach Anspruch 6 und ein Eingabe-Peripheriegerät (CAM), das dafür ausgelegt ist, die Fotografie (IMG) aufzunehmen.

8. Gesicherte elektronische Schaltung (TPM) nach Anspruch 5 oder 6, umfassend eine elektronische Schaltung zur Freigabe (REL_C) des Eingabe-Peripheriegeräts (KBD, MS, TS, CAM) und des Ausgabe-Peripheriegeräts (SCR, SPK, PRN), die dafür ausgelegt ist, eine Freigabeinformation (SEC_MSG) an das Ausgabe-Peripheriegerät (SCR, SPK, PRN) zu senden, bevor sie es freigibt.

9. Computerprogramm, umfassend eine Reihe von Befehlen, die, wenn sie von einem Prozessor ausgeführt werden, das Verfahren nach einem der Ansprüche 1 bis 4 umsetzen.

10. Nicht flüchtiges, computerlesbares Speichermedium, in dem ein Computerprogramm nach Anspruch 9 gespeichert ist.

## Claims

1. A method for authenticating a secure electronic device (BNK_SRV) from a non-secured electronic device (PC, SP) comprising an input peripheral (KBD, MS, TS, CAM, MIC), an output peripheral (SCR, SPK, PRN, TS) and a secure electronic circuit (TPM), the method comprising:
(a) taking control (CTRL) of the input peripheral (KBD, MS, TS, CAM, MIC) and of the output peripheral (SCR, SPK, PRN, TS) by the secure electronic circuit (TPM);
(b) opening (OSS) a secure session (VPN, TLS) by the secure electronic circuit (TPM) with the secure electronic device (BNK_SRV);
(c) acquiring (ACQ), by the secure electronic circuit (TPM), user information (IMG);
(d) sending (SND) the user information (IMG), by the secure electronic circuit (TPM) to the secure electronic device (BNK_SRV);
(e) receiving (RCPT), by the secure electronic circuit (TPM), transformed user information (TRN_IMG) resulting from a predetermined transformation applied by the secure electronic device (BNK_SRV) to the user information (IMG);
(f) sending (DSPL) the transformed user information (TRN-IMG), by the secure electronic circuit (TPM) to the output peripheral (SCR, SPK, PRN, TS) controlled by the secure electronic circuit (TPM);
(g) obtaining (OBT) authentication information (OK_NOK) by the secure electronic circuit (TPM) from the input peripheral (KBD, MS, TS) controlled by the secure electronic circuit (TPM);
(h) authenticating (AUTH) the secure electronic device (BNK-SRV), by the secure electronic circuit (TPM), according to the authentication information (OK_NOK) obtained.

2. The authentication method according to claim 1, wherein the user information (IMG) is a photograph.

3. The authentication method according to claim 2, comprising taking the photograph (IMG) by an input peripheral (CAM) of the non-secured electronic device (SP).

4. The authentication method according to one of the preceding claims, comprising releasing (REL) the input peripheral (KBD, MS, TS, CAM, MIC) and the output peripheral (SCR, SPK, PRN, TS) by the secure electronic circuit (TPM), the release of the output peripheral (SCR, SPK, PRN) being preceded by a sending (DSPL_LV), by the secure electronic circuit (TPM), of release information (SEC_MSG) to said output peripheral (SCR, SPK, PRN, TS).

5. A secure electronic circuit (TPM) arranged so as to be installed in a non-secured electronic device (PC, SP) comprising an input peripheral (KBD, MS, TS, CAM, MIC) and an output peripheral (SCR, SPK, PRN, TS), the secure electronic circuit (TPM) comprising:
an electronic control circuit (CTRL_C) for the input peripheral (KBD, MS, TS, CAM, MIC) and output peripheral (SCR, SPK, PRN, TS);
an electronic secure session opening circuit (OSS_C) arranged to open a secure session (VPN, TLS) with a secure electronic device (BNK_SRV);
an electronic user information (IMG) acquiring circuit (ACQ_C);
an electronic transmission circuit (SND_C) arranged to send user information (IMG) to the secure electronic device (BNK_SRV);
an electronic reception circuit (RCPT_C) arranged to receive transformed user information (TRN_IMG) resulting from a predetermined transformation applied by the secure electronic device (BNK_SRV) to the user information (IMG);
an electronic transmission circuit (DSPL_C) arranged to send transformed user information (TRN_IMG) to the output peripheral (SCR, SPK, PRN, TS) controlled by the secure electronic circuit (TPM);
an electronic obtaining circuit (OBT_C) arranged to obtain authentication information (OK_NOK) from the input peripheral (KBD, MS, TS) controlled by the secure electronic circuit (TPM);
an electronic authentication circuit (AUTH_C) arranged to authenticate the secure electronic device (BNK_SRV) according to the authentication information (OK_NOK) obtained.

6. The secure electronic circuit (TPM) according to claim 5, wherein the user information (IMG) is a photograph.

7. A non-secured electronic device (SP) comprising a secure electronic circuit (TPM) according to claim 6 and an input peripheral (CAM) arranged to take the photograph (IMG).

8. The secure electronic circuit (TPM) according to claim 5 or 6, comprising an electronic release circuit (REL_C) arranged to release the input peripheral (KBD, MS, TS, CAM) and the output peripheral (SCR, SPK, PRN), and to send release information (SEC_MSG) to said output peripheral (SCR, SPK, PRN) before releasing it.

9. A computer program comprising a series of instructions which, when they are executed by a processor, implement the method according to one of claims 1 to 4.

10. A non-transitory computer readable storage medium storing a computer program according to claim 9.
